# EUROPEAN PATENT SPECIFICATION

(11) **EP 3 157 779 B1**
(45) Date of publication and mention of the grant of the patent: **28.03.2018**
(21) Application number: 15742079.5
(22) Date of filing: 19.06.2015
(51) Int. Cl.: B62D 1/18, B60N 2/50, B60N 2/54, B60N 2/02, B60N 2/16, B60N 2/24, B60N 2/30

(54) **DRIVING PLACE OF A COMMERCIAL VEHICLE**
FAHRPLATZ EINES NUTZFAHRZEUGS
POINT DE CONDUITE D'UN VÉHICULE UTILITAIRE

(30) Priority: 19.06.2014 IT MI20141115
(43) Date of publication of application: 26.04.2017
(73) Proprietor: Iveco S.p.A., 10156 Torino (IT)
(72) Inventor: NICOSIA, Biagio, I-10141 Torino (IT); CALAON, Ivan, I-10125 Torino (IT)
(74) Representative: Fiume, Orazio
(86) International application number: PCT/IB2015/054633
(87) International publication number: WO 2015/193854

(56) References cited:
- EP-A1- 0 029 757
- DE-A1- 2 222 397
- DE-A1- 19 701 364
- GB-A- 1 242 386
- US-A- 1 770 321
- US-A- 3 059 966

## Description

### Field of the invention

The present invention relates to the field of commercial vehicles and in particular to a driving place.

### State of the art

Small commercial vehicles are often used for delivery of goods in urban areas. This means that the driver must be able to get easily in and out of the driving place, because of the many times that this is done on a daily basis.
The driving place is the assembly formed by the driver's seat, the pedals and the steering wheel.
Therefore, the driving place of a small commercial vehicle must not only be sufficiently comfortable to avert pathologies due to incorrect postures and to stresses caused by irregularities in the road surface, but also has to ensure an ample adjustment to fit with any driver's body size. US 1 770 321 A and DE 197 01 364 A1, disclose two examples of seats connected exclusively to a quasi-vertical post. While US 1 770 321 A can be regarded as corresponding to the preamble of claim 1 as far as the geometrical configuration of the seat is concerned, no mention of that seat being suitable as a driver's seat is made, nor are shock-absorbing means explicitly disclosed therein. Conversely, DE 197 01 364 A1 discloses a suspension scheme comprising an elongating spring.

### Summary of the Invention

Therefore, the object of the present invention is to overcome all the aforesaid drawbacks and to indicate a driving place of a commercial vehicle allowing to optimize the ergonomics, the habitability of the driving place, the manoeuvrability of the vehicle as well as the comfort of use for the driver of the vehicle, irrespective of his/her size. Thus, present invention is a driving place for a commercial vehicle according to claim 1, with additional features thereof being disclosed in the dependent claims. Advantageously, the fact that the driver's seat can slide in elevation on an oblique steering column towards the back of the vehicle allows the driver to improve the perception of the vehicle overall dimensions. The present invention also concerns a commercial vehicle that implements the aforementioned driving place. The claims form an integral part of the present description.

### Brief description of the figures

Further purposes and advantages of the present invention will become clear from the following detailed description of an example of embodiment (and of its variants) and from the annexed drawings given purely by way of explanatory and non-limiting example, wherein:
Figure 1 shows a side view of a preferred embodiment of a vehicle driving place according to the present invention;
Figure 2 shows a perspective view of the view of Figure 1. The same numbers and the same reference letters in the figures identify the same elements or components.

In the present description, the term "second" component does not imply the presence of a "first" component. These terms are in fact used only for clarity's sake and are not intended as limiting.

### Detailed description of examples of embodiment

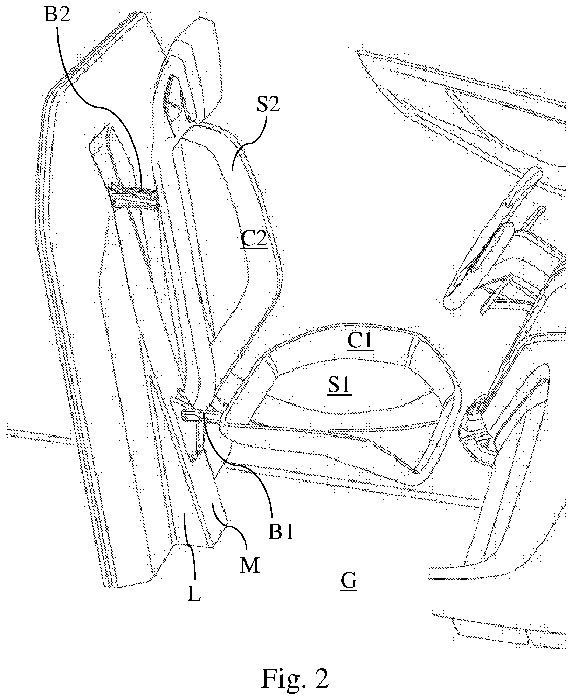

The driving place according to the present invention comprises a driver's seat, exclusively secured to the vehicle structure through a long-limbed post M sliding on a corresponding guide, defined by the steering column L shown in Figure 2.

The guide keeps the long-limbed post M in a vertical plane parallel to the longitudinal development of the vehicle, in an oblique position so that an upper end M2 is more set back than the lower end M1.

This post arrangement allows the seat to rise away from the vehicle dashboard D and to lower, coming closer to the vehicle dashboard D, always remaining parallel to itself.

The seat S includes a seat S1 and a seat back S2. They are rigidly connected to each other, maintaining in any condition the same substantially perpendicular mutual position.

Both the seat S1 and the seat back S2 are connected to the post by means of respective connecting rods B1 and B2, so that an articulated quadrilateral structure is defined between the post M and the seat S.
In particular, a first connecting rod B1 is connected to a lower part of the seat and a second connecting rod B2 is connected to a rear part of the seat back.
A first end of a damper DP is hinged close to the lower end M1 of the post M, while a respective opposite end is hinged to the seat, in a point different from the hinging point to the respective connecting rod B1.
The articulated quadrilateral defined by the coupling seat S/post M allows a complex movement of the seat S with respect to the post M in said vertical plane. The damper DP dampens such complex movement when the seat is stressed, for example due to the roughness of the road surface or when the driver drops on the seat.
The driving place according to the present invention also comprises a collapsible steering wheel V, adjustable at least in its depth, and a set of pedals P associated with the floor G and sliding according to the longitudinal development of the vehicle (an example of a similar arrangement is disclosed in prior art document DE 2 222 397 A). With reference to the figure, both the post M, the steering wheel V and the pedals P are provided with respective double arrows, each of them being equipped with a first direction A and a respective opposite direction Z. According to a preferred embodiment of the present invention, the sliding of the post M with respect to the respective guide - and therefore of the seat S with respect to the steering column L -, of the pedals P with respect to the floor G and of the steering wheel, axially, with respect to its own shaft, are interlocked by means of suitable electric actuators, preferably by means of a control unit provided with memories of the mutual positions of said components defining the driving place of the commercial vehicle.

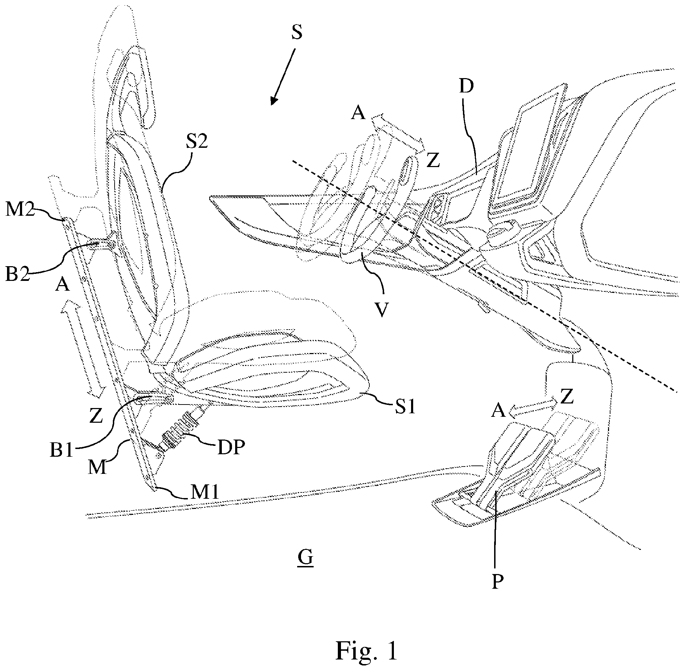

The shaft of the steering wheel is schematically shown in Figure 1 by means of a respective rotation axis X.

With the proper slight adjustments, which each driver may carry out, the lifting of the seat S determines its movement in the direction A, thus implying a corresponding movement of the steering wheel and of the pedals in the respective directions A, towards the driver's seat S. The opposite is true with respect to respective opposite directions.

It is clear that the directions A or Z are indicated with the same symbol because they are interrelated, although the directions of movement are distinct in spite of their lying in a same vertical plane parallel to the longitudinal development of the vehicle.

Figure 2 shows the steering column L that serves as a guide along which the post M slides. Only for clarity's sake, the drawing does not show the damper DP, which must obviously be present to support the seat.
With reference to Figure 2, both the seat and the seat back are shaped like cradles.
These cradles are designed to accommodate respective cushions.
The edges C1 and C2 defined by the cradles are preferably made of a surface-treated material, preferably anodized aluminium and/or light alloys.
Advantageously, when the driver enters or leaves the driving place, the edges of the surface-treated material cause little friction against the driver's garments, thus facilitating these operations.
When, on the other hand, the driver is sitting on the seat, the edges C1 and C2 have a containing, enveloping effect, thus ensuring a sufficient degree of deflection relative to the body of the driver.
According to the present description, "back" or "forward" are references relating to the longitudinal development of the vehicle in which the aforesaid driving place must be implemented.

From the above description, the person skilled in the art is able to embody the object of the invention without introducing any further construction details.

## Claims

1. Driving place for a commercial vehicle comprising
- a driver's seat (S)
- a steering wheel (V) and
- a set of pedals (P),
wherein the driver's seat (S) is adapted to be fastened to the vehicle exclusively by means of a long-limbed post (M) sliding along a respective guide (L), so that the long-limbed post (M) lies on a vertical plane parallel to a longitudinal development of the vehicle, arranged in oblique position so that a respective upper end (M2) of the post is set back with respect to a respective lower end (M1), wherein said driver's seat comprises a seat (S1) and a seat back (S2) rigidly interconnected to each other, and wherein the seat (S) is associated to said long-limbed post (M) by means of an articulated parallelogram configuration (M, B1, B2, S) arranged so that it vacates the lower part of the seat (S1) and **characterized in that** an adjustment in elevation of said seat is carried out by a coaxial sliding of said long-limbed post (M) on said corresponding guide, while said parallelogram configuration is structured to absorb the bumps of the road.

2. Driving place according to claim 1, wherein said parallelogram configuration comprises
- a first connecting rod (B1) hinged by a first end on said long-limbed post (M) and by a second end, opposite to said first end, on a lower part of said seat (S1) and
- a second connecting rod (B2) hinged by a first end on said long-limbed post (M) and by a second end, opposite to said first end, on a rear part of said seat back (S2).

3. Driving place according to any one of the preceding claims, wherein said driver's seat (S) is supported by a shock absorber (DP) having a first end hinged to said post (M) and a second end, opposite to the first end, hinged to a lower part of said driver's seat (S).

4. Driving place according to any one of the preceding claims, wherein said steering wheel (V) is collapsible at least in depth, and wherein said set of pedals (P) is slidingly associated to a vehicle floor (G), so that when the driver's seat (S) is raised (A), the set of pedals (P) and the steering wheel (V) come closer to the driver's seat (S).

5. Driving place according to any one of the preceding claims from 2 to 5, wherein said seat (S1) and said seat back (S2) are shaped like cradles to accommodate respective cushions and wherein the edges (C1, C2) of such cradles are made of metallic material.

6. Light commercial vehicle comprising a driving place according to any of the preceding claims 1-5.

## Patentansprüche

1. Fahrerplatz für ein Nutzfahrzeug, umfassend:
- einen Fahrersitz (S),
- ein Lenkrad (V), und
- einen Satz von Pedalen (P),
wobei der Fahrersitz (S) dazu vorgesehen ist, an dem Fahrzeug ausschließlich durch einen langgestreckten Pfosten (M) befestigt zu werden, der entlang einer entsprechenden Führung (L) befestigt ist, so dass der langgestreckte Pfosten (M) in einer vertikalen Ebene parallel zu einer Längserstreckung des Fahrzeugs liegt und in einer geneigte Stellung angeordnet ist, so dass ein entsprechendes oberes Ende (M2) des Pfostens gegenüber dem entsprechend unteren Ende (M1) zurückgesetzt ist, und wobei der Fahrersitz eine Sitzfläche (S1) und eine Sitzrückenlehne (S2) umfasst, die starr miteinander verbunden sind, wobei die Sitzfläche (S1) mit dem langgestreckten Pfosten (M) mittels einer gelenkigen Parallelogramm-Anordnung (M, B1, B2, S) zugeordnet ist, die derart angeordnet ist, dass sie den unteren Teil der Sitzfläche (S1) frei lässt, **dadurch gekennzeichnet, dass** eine Höheneinstellung des Sitzes ausgeführt wird durch ein koaxiales Gleiten des langgestreckten Pfostens (M) auf der entsprechenden Führung, wobei die Parallelogramm-Anordnung zur Absorption von Straßenunebenheiten konstruiert ist.

2. Fahrerplatz gemäß Anspruch 1, bei welchem die Parallelogramm-Anordnung umfasst:
- einen ersten Verbindungsstab (B1), der an ein erstes Ende des langgestreckten Pfostens (M) angelenkt ist und mit einem zweiten Ende, das dem ersten Ende gegenüberliegt, an einem unteren Teil der Sitzfläche (S1) angelenkt ist, und
- einen zweiten Verbindungsstab (B2), der mit einem ersten Ende an den langgestreckten Pfosten (M) angelenkt ist und mit einem zweiten Ende, das dem ersten Ende gegenüberliegt, an einen hinteren Teil der Sitzrückenlehne (S2) angelenkt ist.

3. Fahrerplatz gemäß einem der vorhergehenden Ansprüche, bei welchem der Fahrersitz (S) durch einen Stoßdämpfer (DP) gelagert ist, mit einem ersten Ende, das an den Pfosten (M) angelenkt ist, und einem zweiten Ende, gegenüberliegend dem ersten Ende, das an einen unteren Teil des Fahrersitzes (S) angelenkt ist.

4. Fahrerplatz gemäß einem der vorhergehenden Ansprüche, in welchem das Lenkrad (V) zumindest in seiner Tiefe zusammenschiebbar ist, und wobei der Satz von Pedalen (P) gleitend an einem Fahrzeugboden (G) angeordnet ist, so dass dann, wenn der Fahrersitz (S) angehoben wird (A), der Satz von Pedalen (P) und das Lenkrad (V) sich dem Fahrersitz (S) annähern.

5. Fahrerplatz gemäß einem der vorhergehenden Ansprüche 2 bis 5, bei welchem die Sitzfläche (S1) und die Sitzrückenlehne (S2) wie Mulden zur Aufnahme entsprechender Polster geformt sind, wobei die Kanten (C1, C2) solcher Mulden aus einem metallischen Material hergestellt sind.

6. Leichtes Nutzfahrzeug, umfassend einen Fahrerplatz gemäß einem der vorgehenden Ansprüche 1 bis 5.

## Revendications

1. Point de conduite pour un véhicule utilitaire comprenant :
- un siège (S) du conducteur
- un volant (V) et
- un ensemble de pédales (P),
dans lequel le siège (S) du conducteur est adapté pour être fixé au véhicule exclusivement à l'aide d'un montant longiligne (M) coulissant le long d'un guide respectif (L), de telle sorte que le montant longiligne (M) repose sur un plan vertical parallèle à un développement longitudinal du véhicule, agencé dans une position oblique de telle sorte qu'une extrémité supérieure respective (M2) du montant est en retrait par rapport à une extrémité inférieure respective (M1), dans lequel ledit siège du conducteur comprend un siège (S1) et un dossier (S2) rigidement reliés entre eux, et dans lequel le siège (S) est associé audit montant longiligne (M) à l'aide d'une configuration de parallélogramme articulé (M, B1, B2, S) agencé de telle sorte qu'il dégage la partie inférieure du siège (S1) et **caractérisé en ce qu'**un ajustement de l'élévation dudit siège est réalisé par un coulissement coaxial dudit montant longiligne (M) sur ledit guide correspondant, alors que ladite configuration de parallélogramme est structurée pour absorber les bosses de la route.

2. Point de conduite selon la revendication 1, dans lequel ladite configuration de parallélogramme comprend
- une première bielle (B1) s'articulant par une première extrémité sur ledit montant longiligne (M) et par une seconde extrémité, opposée à la première extrémité, sur une partie inférieure dudit siège (S1) et
- une deuxième bielle (B2) s'articulant par une première extrémité sur ledit montant longiligne (M) et par une seconde extrémité, opposée à ladite première extrémité, sur une partie arrière dudit dossier (S2).

3. Point de conduite selon l'une quelconque des revendications précédentes, dans lequel ledit siège (S) du conducteur est supporté par un amortisseur (DP) ayant une première extrémité s'articulant audit montant (M) et une seconde extrémité, opposée à la première extrémité, s'articulant à une partie inférieure dudit siège (S) du conducteur.

4. Point de conduite selon l'une quelconque des revendications précédentes, dans lequel ledit volant (V) est repliable au moins en profondeur, et dans lequel ledit ensemble de pédales (P) est associé en coulissement à un plancher (G) de véhicule, de telle sorte que, lorsque le siège (S) du conducteur est soulevé (A), l'ensemble de pédales (P) et le volant (V) se rapprochent du siège (S) du conducteur.

5. Point de conduite selon l'une quelconque des revendications précédentes 2 à 5, dans lequel ledit siège (S1) et ledit dossier (S2) ont la forme de berceaux pour loger des coussins respectifs et dans lequel les bords (C1, C2) de tels berceaux sont composés d'un matériau métallique.

6. Véhicule utilitaire léger comprenant un point de conduite selon l'une quelconque des revendications précédentes 1-5.
